# EUROPEAN PATENT APPLICATION

(11) **EP 4 815 278 A1**
(43) Date of publication of application: **30.09.2026**
(21) Application number: 26163656.7
(22) Date of filing: 10.03.2026
(51) Int. Cl.: H02M 1/00, H02M 3/07

(54) **MULTI-OUTPUT DIRECT CURRENT (DC) VOLTAGE CIRCUIT**

(30) Priority: 13.03.2025 US 202563771069 P; 20.02.2026 US 202619545255
(71) Applicant: QORVO US, INC., Greensboro, NC 27409 (US)
(72) Inventor: KHLAT, Nadim, 31770 Colomiers (FR); KAY, Michael R., Greensboro, 27409 (US)
(74) Representative: D Young & Co LLP

(57) **Abstract**

A multi-output direct current (DC) voltage circuit is disclosed. Herein, various embodiments are disclosed to help reduce solution size of the multi-output DC voltage circuit. In one aspect, a switched voltage booster circuit is configured to generate a boosted voltage based on a voltage booster duty cycle to drive multiple switched voltage output circuits, each of which will output a respective output voltage based on a respective output voltage duty cycle shorter than or equal to the voltage booster duty cycle. In another aspect, each of the switched voltage booster circuit and the switched voltage output circuits is configured to utilize lightly doped field-effect transistors (LDFETs) as switches whenever possible. By sharing the switched voltage booster circuit among the switched voltage output circuits and utilizing LDFETs as switches, it is possible to reduce the solution size of the multi-output DC voltage circuit for potential use in space constrained wireless devices.

## Description

### Related Applications

This application claims the benefit of U.S. provisional patent application serial number 63/771,069, filed on March 13, 2025, the disclosure of which is hereby incorporated herein by reference in its entirety.

### Field of the Disclosure

The technology of the disclosure relates generally to a direct current (DC) voltage that can concurrently generate multiple DC voltages based on a common switched DC voltage converter.

### Background

Mobile communication devices have become increasingly common in current society for providing wireless communication services. The prevalence of these mobile communication devices is driven in part by the many functions that are now enabled on such devices. Increased processing capabilities in such devices means that mobile communication devices have evolved from being pure communication tools into sophisticated mobile multimedia centers that enable enhanced user experiences.

A state-of-the-art mobile communication device must be able to communicate a radio frequency (RF) signal(s) in a variety of wireless communication systems, such as long-term evolution (LTE) and new radio (NR), based on a variety of transmit/receive configurations, such as uplink/downlink multiple-input, multiple-output (UL/DL-MIMO), enhanced dual-connectivity (EN-DC), and diversity receive (DRX). As an example, many multi-transmission proposals have been made for third-generation partnership project (3GPP) release 18 to support concurrent UL-MIMO and EN-DC transmissions on multiple RF bands. As such, a wireless communication device is required to concurrently transmit multiple RF signals (e.g., 2xMIMO + 1xEN-DC). In this regard, the mobile communication device must employ a power management circuit that can simultaneously support multiple power amplifiers to enable multiple concurrent transmissions. In addition, the mobile communication device must also operate efficiently when only one of the power amplifiers is used for transmission. Furthermore, there is a constant need to reduce the solution size of the power management circuit in the mobile communication device.

### Summary

Particular aspects are set out in the appended independent claims. Various optional embodiments are set out in the dependent claims. Embodiments of the disclosure relate to a multi-output direct current (DC) voltage circuit. Herein, various embodiments are disclosed to help reduce solution size of the multi-output DC voltage circuit. In one aspect, a switched voltage booster circuit is configured to generate a boosted voltage based on a voltage booster duty cycle to thereby drive multiple switched voltage output circuits, each of which will output a respective output voltage based on a respective output voltage duty cycle shorter than or equal to the voltage booster duty cycle. In another aspect, each of the switched voltage booster circuit and the switched voltage output circuits is configured to utilize lightly doped field-effect transistors (LDFETs) as switches whenever possible. By sharing the switched voltage booster circuit among the switched voltage output circuits and utilizing LDFETs as switches, it is possible to reduce the solution size of the multi-output DC voltage circuit for potential use in space constrained wireless devices.

In one aspect, a multi-output DC voltage circuit is provided. The multi-output DC voltage circuit includes a switched voltage booster circuit. The switched voltage booster circuit is configured to boost a battery voltage to thereby generate a boosted voltage substantially equal to twice the battery voltage. The switched voltage booster circuit is also configured to alternately output the boosted voltage at a pair of booster outputs in accordance with a voltage booster duty cycle. The multi-output DC voltage circuit also includes multiple switched voltage output circuits. Each of the multiple switched voltage output circuits is coupled to the pair of booster outputs, the battery voltage, and a ground voltage. Each of the multiple switched voltage output circuits is configured to independently output a respective one of multiple output voltages at a respective one of multiple voltage outputs in accordance with a respective one of multiple voltage output duty cycles shorter than or equal to the voltage booster duty cycle.

In another aspect, a method for controlling a multi-output DC voltage circuit to independently output multiple output voltages is provided. The method includes boosting a battery voltage to thereby generate a boosted voltage substantially equal to twice the battery voltage. The method also includes alternately outputting the boosted voltage at a pair of booster outputs in accordance with a voltage booster duty cycle. The method also includes independently outputting each of the multiple output voltages as a function of one or more of the boosted voltage, the battery voltage, and a ground voltage in accordance with a respective one of a plurality of voltage output duty cycles shorter than or equal to the voltage booster duty cycle.

In another aspect, a wireless device is provided. The wireless device includes a multi-output DC voltage circuit. The multi-output DC voltage circuit includes a switched voltage booster circuit. The switched voltage booster circuit is configured to boost a battery voltage to thereby generate a boosted voltage substantially equal to twice the battery voltage. The switched voltage booster circuit is also configured to alternately output the boosted voltage at a pair of booster outputs in accordance with a voltage booster duty cycle. The multi-output DC voltage circuit also includes multiple switched voltage output circuits. Each of the multiple switched voltage output circuits is coupled to the pair of booster outputs, the battery voltage, and a ground voltage. Each of the multiple switched voltage output circuits is configured to independently output a respective one of multiple output voltages at a respective one of multiple voltage outputs in accordance with a respective one of multiple voltage output duty cycles shorter than or equal to the voltage booster duty cycle.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.
Figure 1 is a schematic diagram of an example multi-output direct current (DC) voltage circuit wherein a switched voltage booster circuit is shared among multiple switched voltage output circuits configured to provide multiple output voltages;
Figure 2 is a graphic diagram providing an example illustration as to how the switched voltage output circuits in Figure 1 can share the switched voltage booster circuit;
Figure 3 is a schematic diagram providing an example illustration of the switched voltage booster circuit in Figure 1;
Figure 4 is a schematic diagram providing an example illustration of each of the switched voltage output circuits in Figure 1;
Figures 5A-5F are schematic diagrams illustrating various switching scenarios in the switched voltage booster circuit in Figure 3 and the switched voltage output circuits in Figure 4;
Figure 6 is a schematic diagram providing an example illustration as to how the switched voltage booster circuit of Figure 3 can be optimized using lightly doped field-effect transistors (LDFETs) to help reduce solution size;
Figure 7 is a schematic diagram providing an example illustration as to how each of the switched voltage output circuits of Figure 4 can be optimized using LDFETs to help reduce solution size;
Figure 8 is a schematic diagram of an example communication device wherein the multi-output DC voltage circuit of Figure 1 can be provided; and
Figure 9 is a flowchart of an example process for controlling the multi-output DC voltage circuit of Figure 1.

### Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments of the disclosure relate to a multi-output direct current (DC) voltage circuit. Herein, various embodiments are disclosed to help reduce solution size of the multi-output DC voltage circuit. In one aspect, a switched voltage booster circuit is configured to generate a boosted voltage based on a voltage booster duty cycle to thereby drive multiple switched voltage output circuits, each of which will output a respective output voltage based on a respective output voltage duty cycle shorter than or equal to the voltage booster duty cycle. In another aspect, each of the switched voltage booster circuit and the switched voltage output circuits is configured to utilize lightly doped field-effect transistors (LDFETs) as switches whenever possible. By sharing the switched voltage booster circuit among the switched voltage output circuits and utilizing LDFETs as switches, it is possible to reduce the solution size of the multi-output DC voltage circuit for potential use in space constrained wireless devices.

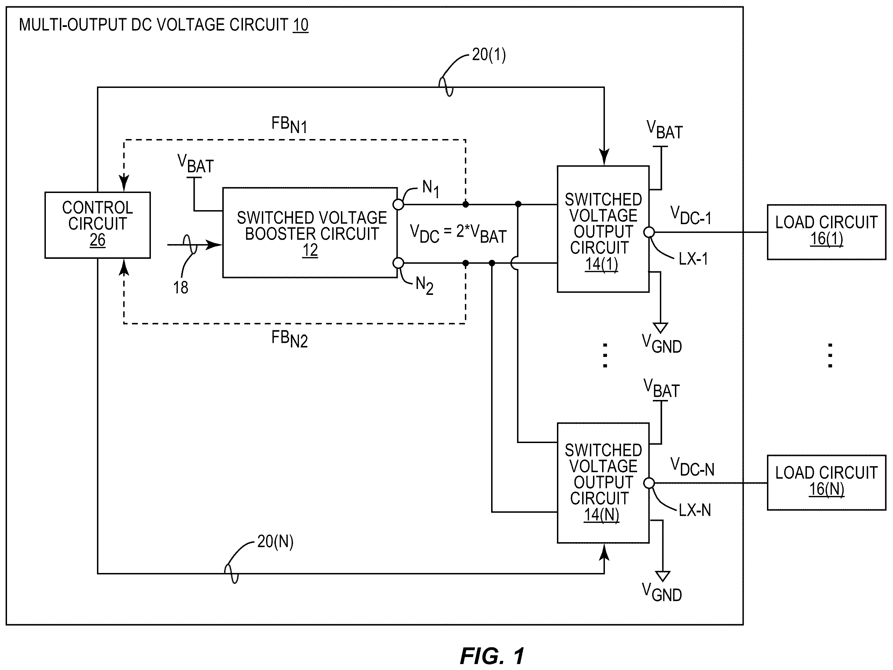

Figure 1 is a schematic diagram of an example multi-output DC voltage circuit 10 wherein a switched voltage booster circuit 12 is shared among multiple switched voltage output circuits 14(1)-14(N) configured to provide multiple output voltages V_{DC-1}-V_{DC-N} at multiple voltage outputs LX-1-LX-N, respectively. In an embodiment, each of the switched voltage output circuits 14(1)-14(N) is coupled to a respective one of multiple load circuits 16(1)-16(N). In a non-limiting example, each of the load circuits 16(1)-16(N) can be a power inductor that can induce a respective low-frequency current based on a respective one of the output voltages V_{DC-1}-V_{DC-N}. In another non-limiting example, each of the load circuits 16(1)-16(N) can be a power amplifier that can amplify a respective signal (not shown) based on a respective one of the output voltages V_{DC-1}-V_{DC-N}. Understandably, the load circuits 16(1)-16(N) may also be other types of electrical circuits that operate based on the output voltages V_{DC-1}-V_{DC-N}.

As described in detail below, the switched voltage booster circuit 12 is configured to boost a battery voltage V_{BAT} in accordance with a voltage booster duty cycle 18 to thereby generate a boosted voltage V_{DC} that is substantially equal to twice the battery voltage V_{BAT}. Herein, the boosted voltage V_{DC} is said to be substantially equal to twice the battery voltage V_{BAT} when the boosted voltage V_{DC} is within a ten percent (10%) margin from two-times the battery voltage V_{BAT} (V_{DC} = 2×V_{BAT} ± 10%). The switched voltage booster circuit 12 is also configured to alternately output (e.g., output based on time-division) the boosted voltage V_{DC} at a pair of booster outputs N₁, N₂.

Each of the switched voltage output circuits 14(1)-14(N) is coupled to the pair of booster outputs N₁, N₂ to receive the boosted voltage V_{DC}. In addition, each of the switched voltage output circuits 14(1)-14(N) is also coupled to the battery voltage V_{BAT} and a ground voltage V_{GND} (e.g., 0 V). Accordingly, each of the switched voltage output circuits 14(1)-14(N) is configured to toggle between the boosted voltage V_{DC}, the battery voltage V_{BAT}, and/or the ground voltage V_{GND} based on a respective one of multiple voltage output duty cycles 20(1)-20(N) to thereby output a respective one of the output voltages V_{DC-1}-V_{DC-N} at a respective one of the voltage outputs LX-1-LX-N.

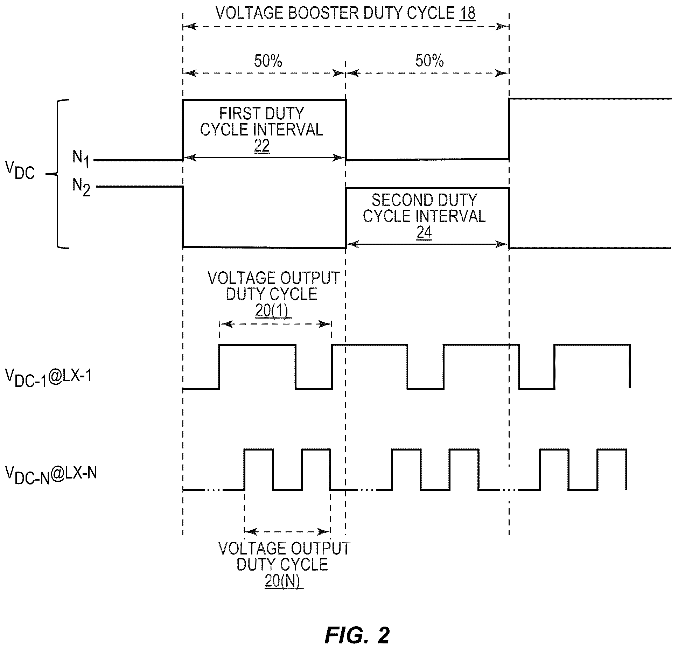

Figure 2 is a graphic diagram providing an example illustration as to how the switched voltage output circuits 14(1)-14(N) can respectively generate the output voltages V_{DC-1}-V_{DC-N} by sharing the switched voltage booster circuit 12 in Figure 1. Common elements between Figures 1 and 2 are shown therein with common element numbers and will not be re-described herein.

Also, for the sake of simplicity, the switched voltage output circuits 14(1) and 14(N) are illustrated herein as a non-limiting example. It should be appreciated that the operating principles illustrated based on the switched voltage output circuits 14(1) and 14(N) can be applicable to any number of the switched voltage output circuits 14(1)-14(N).

Herein, the switched voltage booster circuit 12 is configured to alternately output the boosted voltage V_{DC} at the booster outputs N₁, N₂ in accordance with the voltage booster duty cycle 18. In an embodiment, the voltage booster duty cycle 18 can be divided into a first duty cycle interval 22 and a second duty cycle interval 24. In a non-limiting example, the first duty cycle interval 22 and the second duty cycle interval 24 can each equal one-half (½) of the voltage booster duty cycle 18. In other words, the voltage booster duty cycle 18 can be equally divided into the first duty cycle interval 22 and the second duty cycle interval 24. In an embodiment, the switched voltage booster circuit 12 can output the boosted voltage V_{DC} at the booster output N₁ in the first duty cycle interval 22 and output the boosted voltage V_{DC} at the booster output N₂ in the second duty cycle interval 24.

The switched voltage output circuits 14(1) and 14(N) are each configured to independently generate the respective output voltages V_{DC-1} and V_{DC-N} in accordance with the respective voltage output duty cycles 20(1), 20(N). According to an embodiment of the present disclosure, each of the voltage output duty cycles 20(1), 20(N) must be shorter than or equal to the voltage booster duty cycle 18. Herein, the voltage output duty cycles 20(1), 20(N) can be independent from the voltage booster duty cycle 18. Moreover, the voltage output duty cycles 20(1), 20(N) can be the same or different from one another. By allowing each of the switched voltage output circuits 14(1)-14(N) to operate independently from the switched voltage booster circuit 12, it is thus possible to share the switched voltage booster circuit 12 among the switched voltage output circuits 14(1)-14(N). As a result, it is possible to reduce the solution size of the multi-output DC voltage circuit 10 without having to dedicate the switched voltage booster circuit 12 for each of the switched voltage output circuits 14(1)-14(N).

With reference back to Figure 1, the multi-output DC voltage circuit 10 can include a control circuit 26 for controlling the switched voltage booster circuit 12 and the switched voltage output circuits 14(1)-14(N). In the example illustrated in Figure 2, the control circuit 26 can be configured to determine the voltage booster duty cycle 18 and each of the voltage output duty cycles 20(1)-20(N). As such, the control circuit 26 can equally divide the voltage booster duty cycle 18 into the first duty cycle interval 22 and the second duty cycle interval 24. Alternatively, the control circuit 26 may also unequally divide the voltage booster duty cycle 18 into the first duty cycle interval 22 and the second duty cycle interval 24.

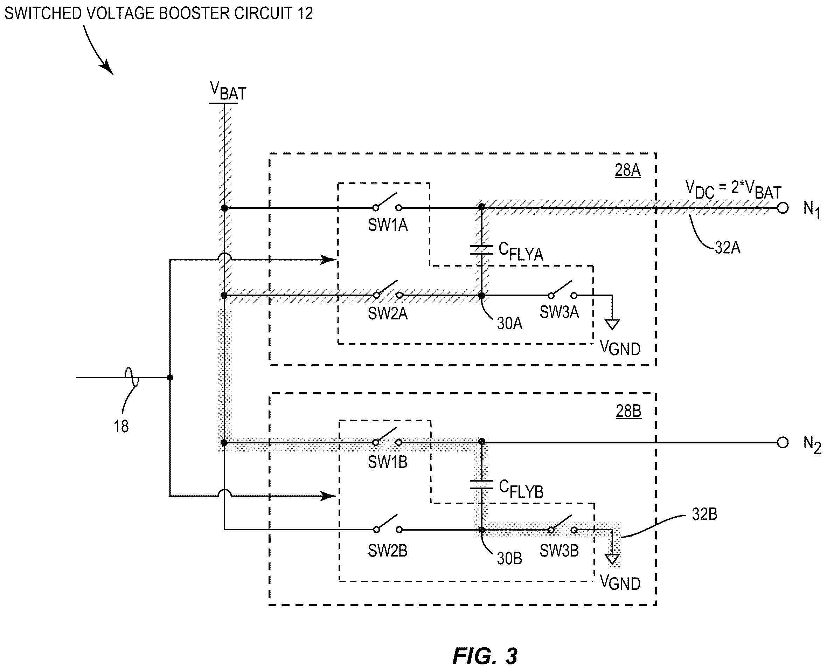

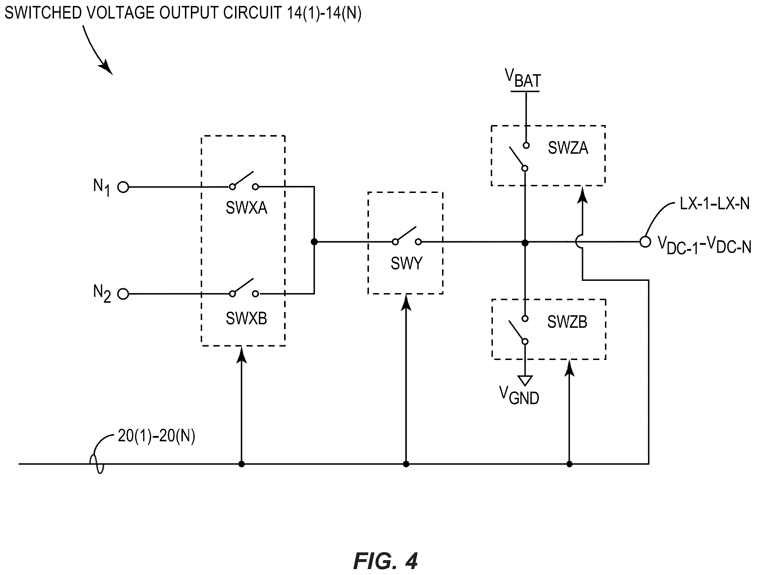

As further explained in Figures 3 and 4, and using the example of Figure 2, the control circuit 26 can control the switched voltage booster circuit 12 to alternately output the boosted voltage V_{DC} at the booster outputs N₁, N₂ in accordance with the voltage booster duty cycle 18, and control each of the switched voltage output circuits 14(1)-14(N) to output the respective one of the output voltages V_{DC-1}-V_{DC-N} in accordance with the respective one of the voltage output duty cycles 20(1)-20(N). In an embodiment, the control circuit 26 may determine the voltage booster duty cycle 18 and/or the voltage output duty cycles 20(1)-20(N) based on a first feedback FB_{N1} of the boosted voltage V_{DC} at the booster output N₁ and a second feedback FB_{N2} of the boosted voltage V_{DC} at the booster output N₂.

Figure 3 is a schematic diagram providing an example illustration of the switched voltage booster circuit 12 in Figure 1. Common elements between Figures 1 and 3 are shown therein with common element numbers and will not be re-described herein.

The switched voltage booster circuit 12 includes a first booster circuit 28A and a second booster circuit 28B. The first booster circuit 28A is coupled between the battery voltage V_{BAT} and the booster output N₁, whereas the second booster circuit 28B is coupled between the battery voltage V_{BAT} and the booster output N₂.

Specifically, the first booster circuit 28A includes a respective first switch SW1A, a respective second switch SW2A, a respective third switch SW3A, and a respective fly capacitor C_{FLYA}. The first switch SW1A is coupled between the battery voltage V_{BAT} and the booster output N₁. The second switch SW2A and the third switch SW3A are coupled in series between the battery voltage V_{BAT} and the ground voltage V_{GND}. The fly capacitor C_{FLYA} is coupled between the booster output N₁ and a middle node 30A located between the second switch SW2A and the third switch SW3A.

Similarly, the second booster circuit 28B includes a respective first switch SW1B, a respective second switch SW2B, a respective third switch SW3B, and a respective fly capacitor C_{FLYB}. The first switch SW1B is coupled between the battery voltage V_{BAT} and the booster output N₂. The second switch SW2B and the third switch SW3B are coupled in series between the battery voltage V_{BAT} and the ground voltage V_{GND}. The fly capacitor C_{FLYB} is coupled between the booster output N₂ and a middle node 30B located between the second switch SW2B and the third switch SW3B.

Assume that the fly capacitor C_{FLYA} has been charged to the battery voltage V_{BAT} prior to starting the voltage booster duty cycle 18. In this regard, during the first duty cycle interval 22, the control circuit 26 will close the second switch SW2A and open the first switch SW1A and the third switch SW3A in the first booster circuit 28A to thereby output the boosted voltage V_{DC} via the booster output N₁ along a first conductive path 32A. In the meantime, the control circuit 26 will close the first switch SW1B and the third switch SW3B and open the second switch SW2B in the second booster circuit 34B to thereby charge the respective fly capacitor C_{FLYB} to the battery voltage V_{BAT} along a second conductive path 32B.

At end of the first duty cycle interval 22, the fly capacitor C_{FLYB} in the second booster circuit 28B will have been charged to the battery voltage V_{BAT}. As such, during the second duty cycle interval 24, the control circuit 26 will close the second switch SW2B and open the first switch SW1B and the third switch SW3B in the second booster circuit 28B to thereby output the boosted voltage V_{DC} via the booster output N₂. Concurrently, the control circuit 26 will close the first switch SW1A and the third switch SW3A and open the second switch SW2A in the first booster circuit 28A to thereby charge the fly capacitor C_{FLYA} to the battery voltage V_{BAT}. As such, by repeating the switching operations described above, the control circuit 26 can control the switched voltage booster circuit 12 to alternately output the boosted voltage V_{DC} at the booster outputs N₁, N₂ in accordance with the voltage booster duty cycle 18.

Figure 4 is a schematic diagram providing an example illustration of any of the switched voltage output circuits 14(1)-14(N) in Figure 1. Common elements between Figures 1 and 4 are shown therein with common element numbers and will not be re-described herein.

Herein, each of the switched voltage output circuits 14(1)-14(N) includes a respective pair of first output switches SWXA, SWXB, a respective second output switch SWY, a respective third output switch SWZA, and a respective fourth output switch SWZB. The first output switches SWXA, SWXB are coupled to the booster outputs N₁, N₂, respectively. The second output switch SWY is coupled between the first output switches SWXA, SWXB and a respective one of the voltage outputs LX-1-LX-N. The third output switch SWZA is coupled between the battery voltage V_{BAT} and the respective one of the voltage outputs LX-1-LX-N. The fourth output switch SWZB is coupled between the respective one of the voltage outputs LX-1-LX-N and the ground voltage V_{GND}.

Each of the switched voltage output circuits 14(1)-14(N) can output the respective one of the output voltages V_{DC-1}-V_{DC-N} at the battery voltage V_{BAT} by closing the third output switch SWZA and opening the second output switch SWY and the fourth output switch SWZB, or output the respective one of the output voltages V_{DC-1}-V_{DC-N} at the ground voltage V_{GND} by closing the fourth output switch SWZB and opening the second output switch SWY and the third output switch SWZA. Each of the switched voltage output circuits 14(1)-14(N) can output the respective one of the output voltages V_{DC-1}-V_{DC-N} at the boosted voltage V_{DC} by closing the first output switch SWXA and the second output switch SWY during the first duty cycle interval 22 and closing the first output switch SWXB and the second output switch SWY during the second duty cycle interval 24. Notably, to output the boosted voltage V_{DC}, the third output switch SWZA and the fourth output switch SWZB shall be opened. Each of the switched voltage output circuits 14(1)-14(N) can output the respective one of the output voltages V_{DC-1}-V_{DC-N} at any other voltage level by toggling between the boosted voltage V_{DC}, the battery voltage V_{BAT}, and/or the ground voltage V_{GND} in accordance with the respective one of the voltage output duty cycles 20(1)-20(N).

With reference back to Figure 1, the control circuit 26 may measure the boosted voltage V_{DC} at one or more of the booster outputs N₁, N₂ during any of the first duty cycle interval 22 and the second duty cycle interval 24 and adjust the voltage booster duty cycle 18 accordingly. More specifically, the control circuit 26 may do so based on the first feedback FB_{N1} and the second feedback FB_{N2}. In an embodiment, when the boosted voltage V_{DC} is higher than a defined threshold, it is an indication that the fly capacitor C_{FLYA} or the fly capacitor C_{FLYB} is over-charged during the first duty cycle interval 22 or the second duty cycle interval 24. Accordingly, the control circuit 26 may reduce the first duty cycle interval 22 and/or the second duty cycle interval 24 to thereby shorten the voltage booster duty cycle 18. Notably, the control circuit 26 can only shorten the voltage booster duty cycle 18 to be equal to a longest one of the voltage output duty cycles 20(1)-20(N).

In contrast, when the boosted voltage V_{DC} is lower than the defined threshold, it is an indication that the fly capacitor C_{FLYA} or the fly capacitor C_{FLYB} is under-charged during the first duty cycle interval 22 or the second duty cycle interval 24. Accordingly, the control circuit 26 may increase the first duty cycle interval 22 and/or the second duty cycle interval 24 to thereby extend the voltage booster duty cycle 18.

In a conventional configuration, each of the switches in the switched voltage booster circuit 12 of Figure 3 and the switched voltage output circuits 14(1)-14(N) of Figure 4 is implemented by either a p-type field-effect transistor (PFET) or an n-type field-effect transistor (NFET). Because the PFET and the NFET can each make a larger footprint, it is thus desirable to replace some of the PFET/NFET switches in the switched voltage booster circuit 12 and the switched voltage output circuits 14(1)-14(N) with lightly dopped PFET (LDPFET) and/or lightly doped NFET (LDNFET) to help further reduce the solution size of the multi-output DC voltage circuit 10.

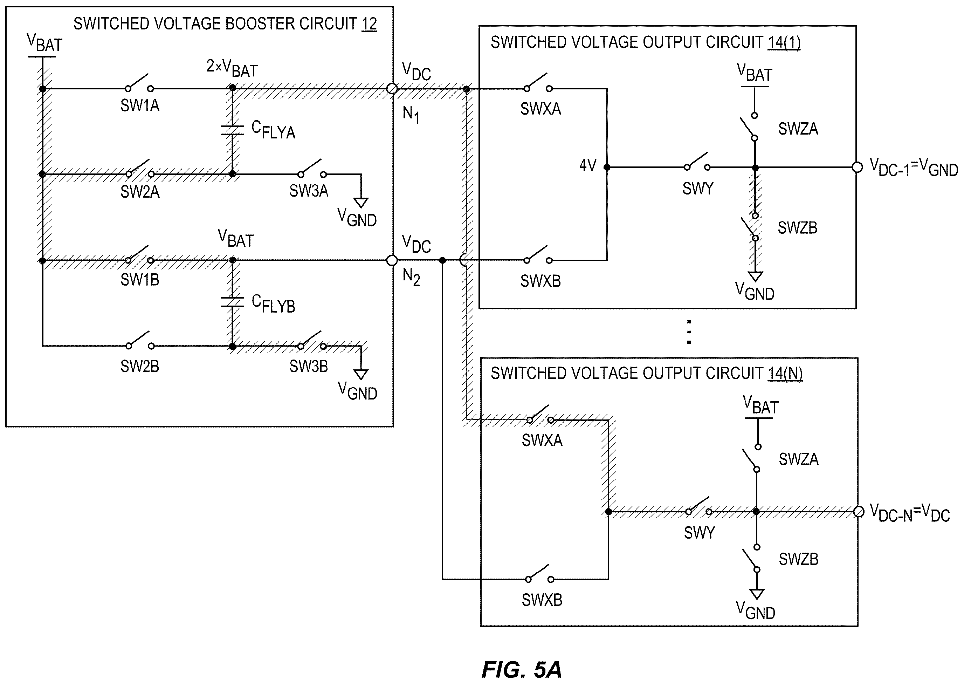

To help identify which switch in the switched voltage booster circuit 12 in Figure 3 and the switched voltage output circuits 14(1)-14(N) may be replaced by a smaller lightly doped transistor (LDPFET or LDNFET), Figures 5A-5F are schematic diagrams illustrating various switching scenarios in the switched voltage booster circuit 12 in Figure 3 and the switched voltage output circuits 14(1)-14(N) in Figure 4. Once again, the switched voltage output circuits 14(1) and 14(N) are illustrated herein as non-limiting examples. Common elements between Figures 3, 4, and 5A-5F are shown therein with common element numbers and will not be re-described herein.

Figure 5A illustrates a scenario wherein the switched voltage output circuit 14(1) outputs the respective output voltage V_{DC-1} at the ground voltage V_{GND}, whereas the switched voltage output circuit 14(N) outputs the respective output voltage V_{DC-N} at the boosted voltage V_{DC} during the first duty cycle interval 22. As shown therein, the first output switch SWXA in each of the switched voltage output circuits 14(1) and 14(N) will see two-times the battery voltage V_{BAT} (2×V_{BAT}) and, therefore, cannot be replaced by lightly doped transistors.

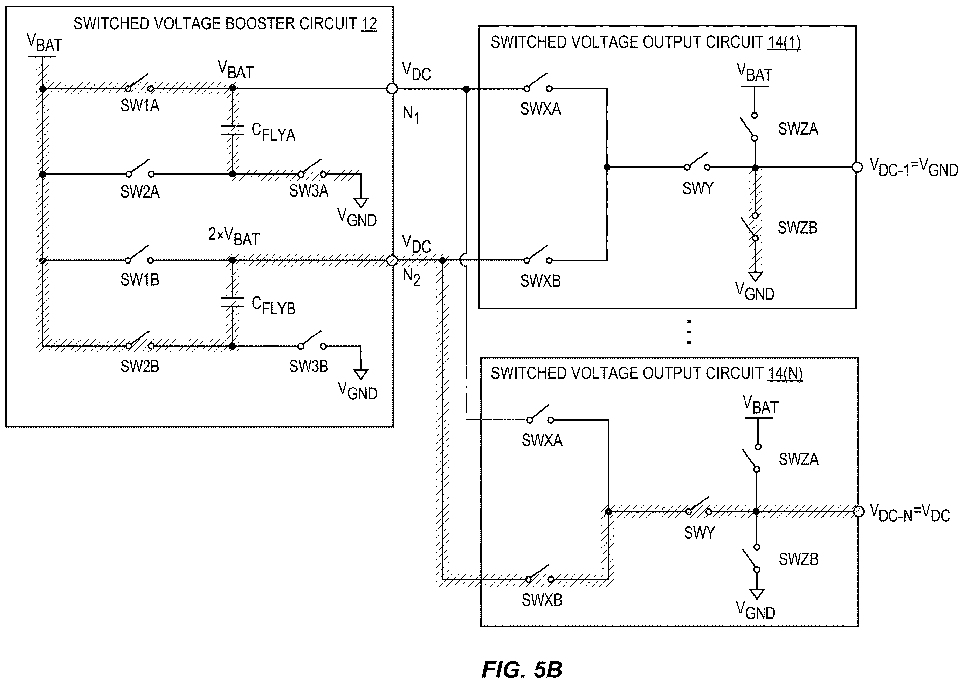

Figure 5B illustrates a scenario wherein the switched voltage output circuit 14(1) outputs the respective output voltage V_{DC-1} at the ground voltage V_{GND}, whereas the switched voltage output circuit 14(N) outputs the respective output voltage V_{DC-N} at the boosted voltage V_{DC} during the second duty cycle interval 24. As shown therein, the first output switch SWXB in each of the switched voltage output circuits 14(1) and 14(N) will see two times the battery voltage V_{BAT} (2×V_{BAT}) and, therefore, cannot be replaced by lightly doped transistors.

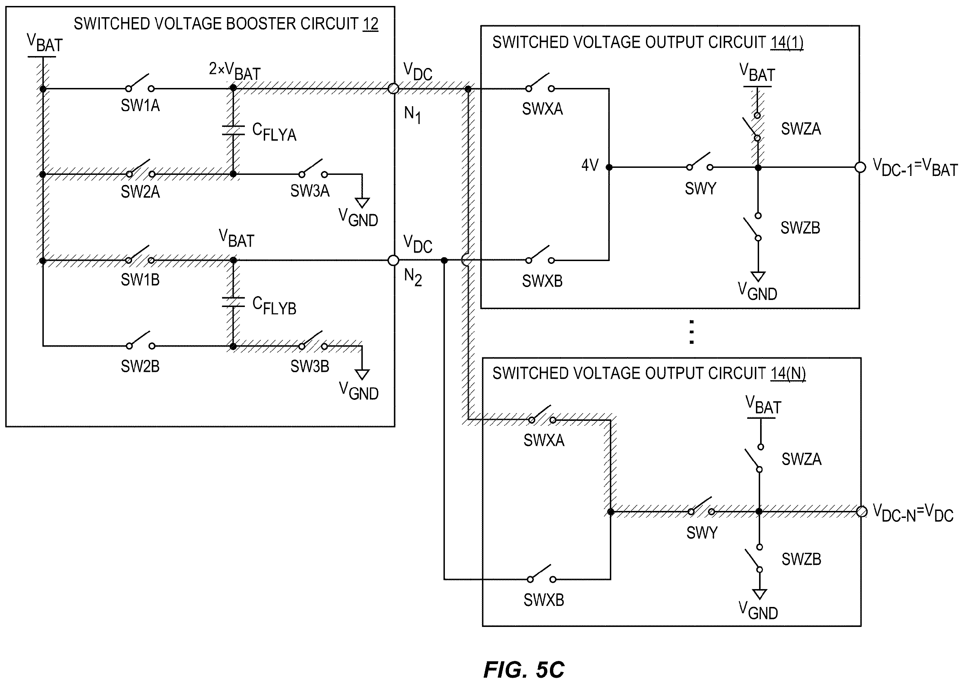

Figure 5C illustrates a scenario wherein the switched voltage output circuit 14(1) outputs the respective output voltage V_{DC-1} at the battery voltage V_{BAT}, whereas the switched voltage output circuit 14(N) outputs the respective output voltage V_{DC-N} at the boosted voltage V_{DC} during the first duty cycle interval 22. As shown therein, the first output switch SWXA in each of the switched voltage output circuits 14(1) and 14(N) will see two-times the battery voltage V_{BAT} (2×V_{BAT}) and, therefore, cannot be replaced by lightly doped transistors.

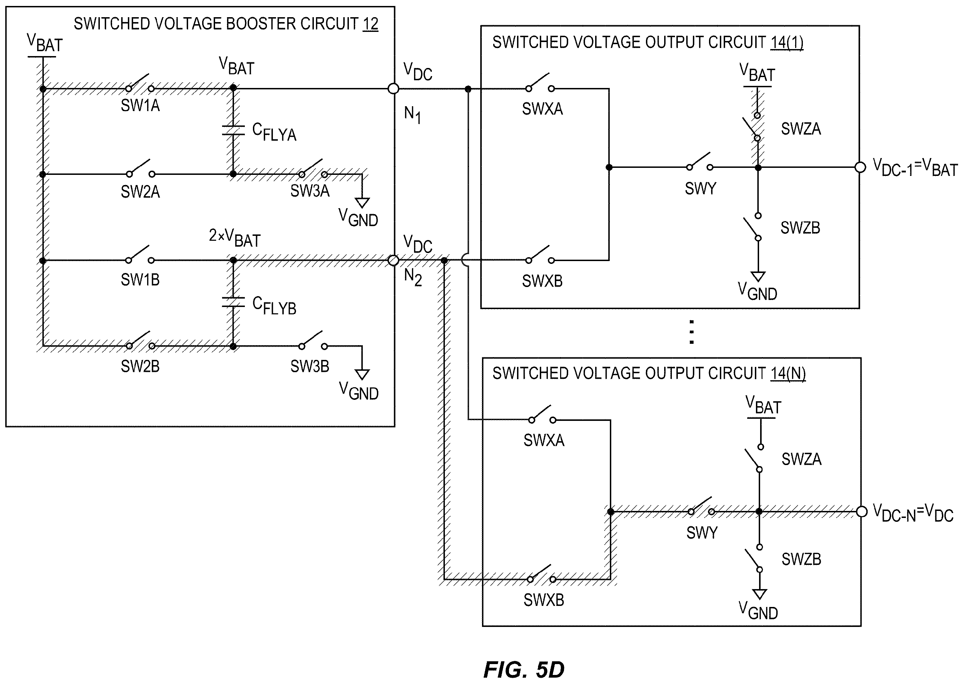

Figure 5D illustrates a scenario wherein the switched voltage output circuit 14(1) outputs the respective output voltage V_{DC-1} at the battery voltage V_{BAT}, whereas the switched voltage output circuit 14(N) outputs the respective output voltage V_{DC-N} at the boosted voltage V_{DC} during the second duty cycle interval 24. As shown therein, the first output switch SWXB in each of the switched voltage output circuits 14(1) and 14(N) will see two times the battery voltage V_{BAT} (2×V_{BAT}) and, therefore, cannot be replaced by lightly doped transistors.

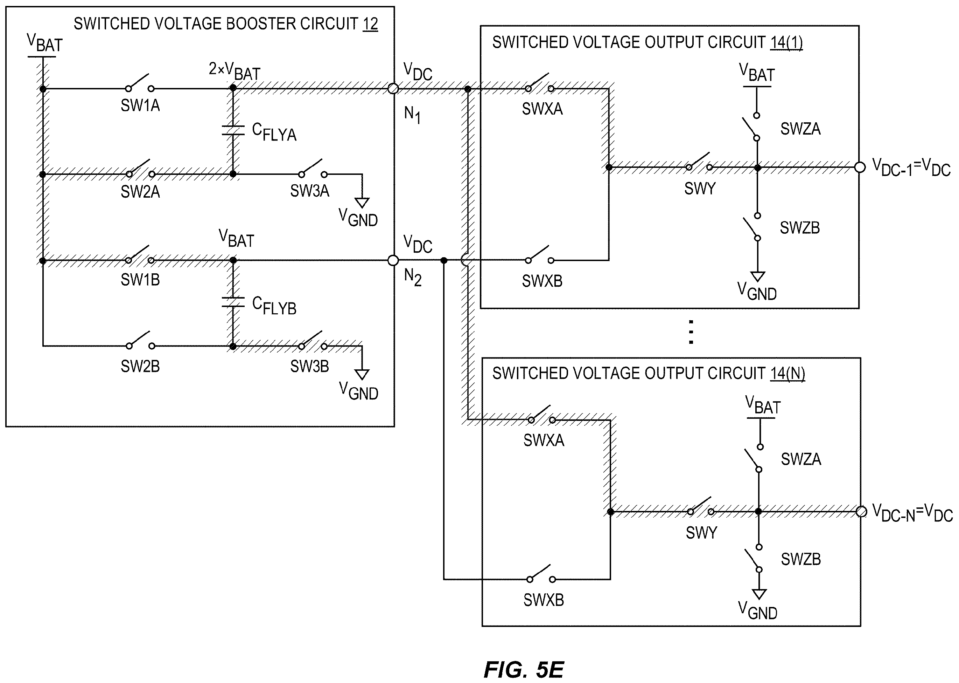

Figure 5E illustrates a scenario wherein the switched voltage output circuits 14(1) and 14(N) output the respective output voltage V_{DC-1} and the respective output voltage V_{DC-N} at the boosted voltage V_{DC} during the first duty cycle interval 22. As shown therein, the first output switch SWXA in each of the switched voltage output circuits 14(1) and 14(N) will see two-times the battery voltage V_{BAT} (2×V_{BAT}) and, therefore, cannot be replaced by lightly doped transistors.

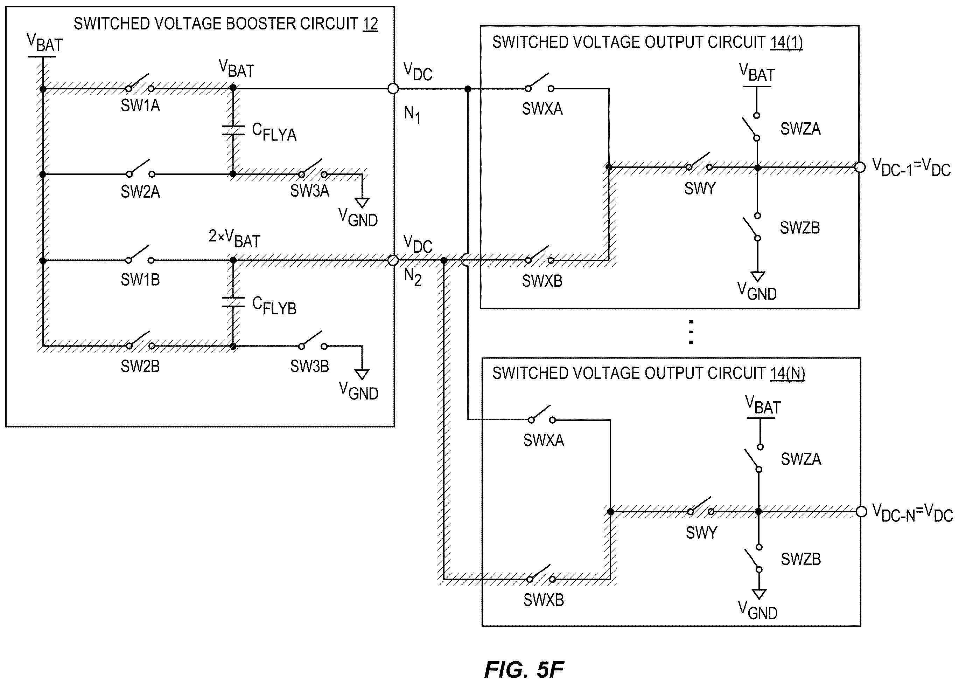

Figure 5F illustrates a scenario wherein the switched voltage output circuits 14(1) and 14(N) output the respective output voltage V_{DC-1} and the respective output voltage V_{DC-N} at the boosted voltage V_{DC} during the second duty cycle interval 24. As shown therein, the first output switch SWXB in each of the switched voltage output circuits 14(1) and 14(N) will see two times the battery voltage V_{BAT} (2×V_{BAT}) and, therefore, cannot be replaced by lightly doped transistors.

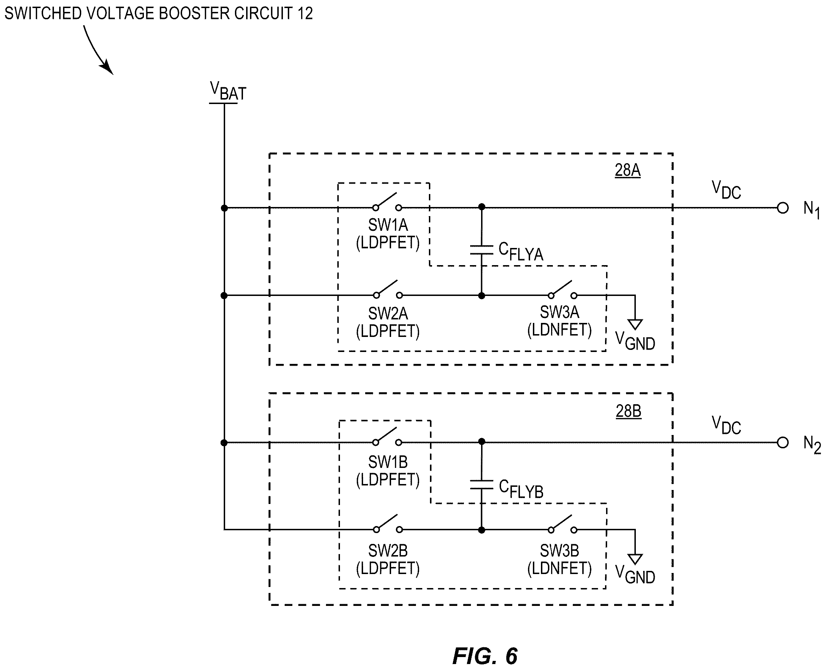

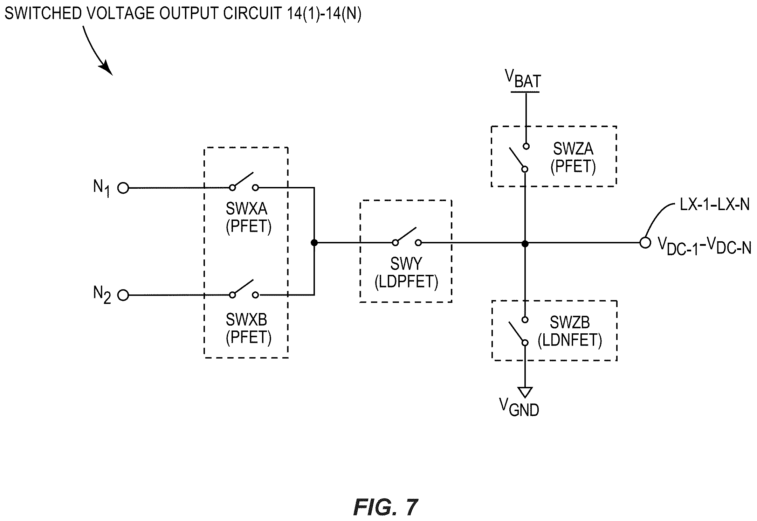

Based on the switching scenarios illustrated in Figures 5A-5F, it is possible to reduce the solution size of the switched voltage booster circuit 12 and the switched voltage output circuits 14(1)-14(N) in accordance with embodiments illustrated in Figures 6 and 7.

Figure 6 is a schematic diagram providing an example illustration as to how the switched voltage booster circuit 12 of Figure 3 can be optimized to help reduce the solution size. Common elements between Figures 3 and 6 are shown therein with common element numbers and will not be re-described herein.

Herein, the first switch SW1A and the second switch SW2A in the first booster circuit 28A and the first switch SW1B and the second switch SW2B in the second booster circuit 28B can each be implemented by an LDPFET. The third switch SW3A in the first booster circuit 28A and the third switch SW3B in the second booster circuit 28B can each be implemented by an LDNFET. Accordingly, the overall solution size of the switched voltage booster circuit 12 can be reduced.

Figure 7 is a schematic diagram providing an example illustration as to how each of the switched voltage output circuits 14(1)-14(N) of Figure 4 can be optimized to help reduce the solution size. Common elements between Figures 4 and 7 are shown therein with common element numbers and will not be re-described herein.

Herein, the second output switch SWY can be implemented as an LDPFET, whereas the fourth output switch SWZB can be implemented by an LDNFET. Accordingly, the overall solution size of each of the switched voltage output circuits 14(1)-14(N) can be reduced.

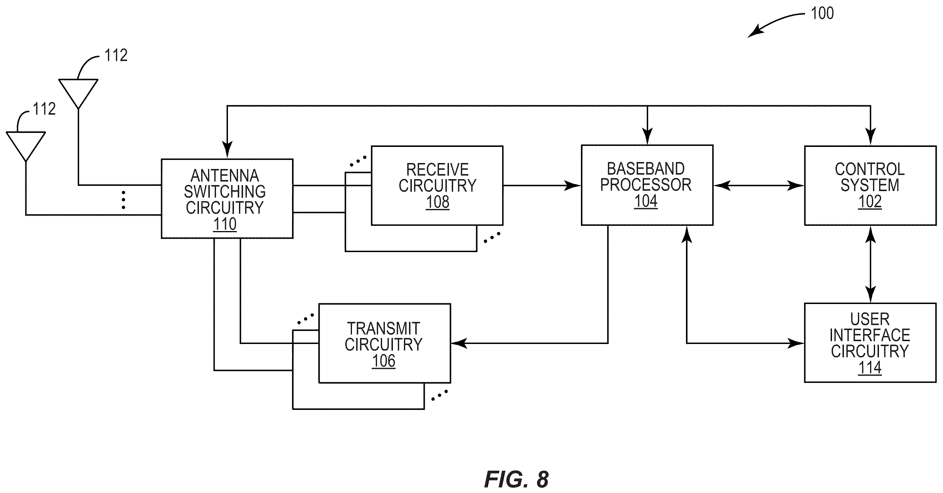

The multi-output DC voltage circuit 10 of Figure 1 can be provided in a communication device (e.g., a wireless device) to support the embodiments described above. In this regard, Figure 8 is a schematic diagram of an example communication device 100 wherein the multi-output DC voltage circuit 10 of Figure 1 can be provided.

Herein, the communication device 100 can be any type of communication devices, such as mobile terminals, smart watches, tablets, computers, navigation devices, access points, base stations (e.g., eNB, gNB, etc.), and any other type of wireless communication devices that support wireless communications, such as cellular, wireless local area network (WLAN), Bluetooth, Ultra-wideband (UWB), and near field communications. The communication device 100 will generally include a control system 102, a baseband processor 104, transmit circuitry 106, receive circuitry 108, antenna switching circuitry 110, multiple antennas 112, and user interface circuitry 114. In a non-limiting example, the control system 102 can be a field-programmable gate array (FPGA), as an example. In this regard, the control system 102 can include at least a microprocessor(s), an embedded memory circuit(s), and a communication bus interface(s). The receive circuitry 108 receives radio frequency signals via the antennas 112 and through the antenna switching circuitry 110 from one or more base stations. A low noise amplifier and a filter cooperate to amplify and remove broadband interference from the received signal for processing. Downconversion and digitization circuitry (not shown) will then downconvert the filtered, received signal to an intermediate or baseband frequency signal, which is then digitized into one or more digital streams using an analog-to-digital converter(s) (ADC).

The baseband processor 104 processes the digitized received signal to extract the information or data bits conveyed in the received signal. This processing typically comprises demodulation, decoding, and error correction operations, as will be discussed in greater detail below. The baseband processor 104 is generally implemented in one or more digital signal processors (DSPs) and application specific integrated circuits (ASICs).

For transmission, the baseband processor 104 receives digitized data, which may represent voice, data, or control information, from the control system 102, which it encodes for transmission. The encoded data is output to the transmit circuitry 106, where a digital-to-analog converter(s) (DAC) converts the digitally encoded data into an analog signal and a modulator modulates the analog signal onto a carrier signal that is at a desired transmit frequency or frequencies. A power amplifier will amplify the modulated carrier signal to a level appropriate for transmission, and deliver the modulated carrier signal to the antennas 112 through the antenna switching circuitry 110. The multiple antennas 112 and the replicated transmit and receive circuitries 106, 108 may provide spatial diversity. Modulation and processing details will be understood by those skilled in the art.

In an example embodiment, the multi-output DC voltage circuit 10 may be provided between the transmit circuitry 106 and the antenna switching circuitry 110. In another example embodiment, the multi-output DC voltage circuit 10 may be provided in the antenna switching circuitry 110.

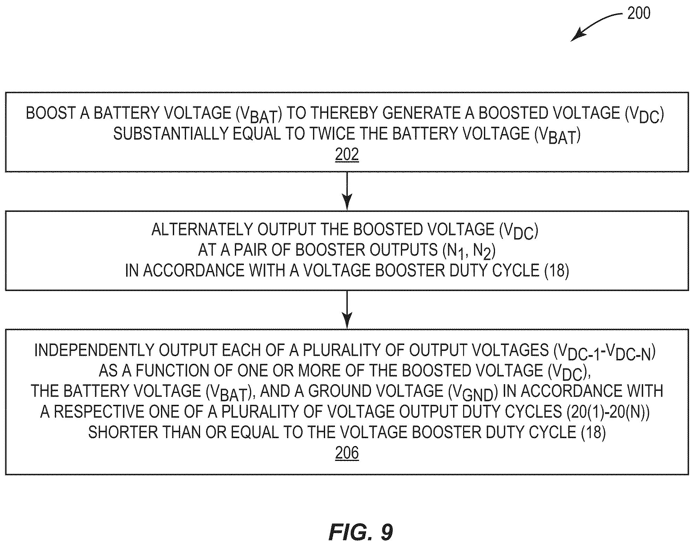

In an embodiment, it is possible to control the multi-output DC voltage circuit 10 of Figure 1 based on a process. In this regard, Figure 9 is a flowchart of an example process 200 for controlling the multi-output DC voltage circuit 10 of Figure 1.

Herein, the process 200 includes boosting the battery voltage V_{BAT} to thereby generate the boosted voltage V_{DC} that is substantially equal to twice the battery voltage V_{BAT} (step 202). The process 200 also includes alternately outputting the boosted voltage V_{DC} at the booster outputs N₁, N₂ in accordance with the voltage booster duty cycle 18 (step 204). The process 200 also includes independently outputting each of the output voltages V_{DC-1}-V_{DC-N} as a function of one or more of the boosted voltage V_{DC}, the battery voltage V_{BAT}, and the ground voltage V_{GND} in accordance with a respective one of the voltage output duty cycles 20(1), 20(N) shorter than or equal to the voltage booster duty cycle 18 (step 206).

Thus, from one perspective, there has now been described a multi-output direct current (DC) voltage circuit. Herein, various embodiments are disclosed to help reduce solution size of the multi-output DC voltage circuit. In one aspect, a switched voltage booster circuit is configured to generate a boosted voltage based on a voltage booster duty cycle to drive multiple switched voltage output circuits, each of which will output a respective output voltage based on a respective output voltage duty cycle shorter than or equal to the voltage booster duty cycle. In another aspect, each of the switched voltage booster circuit and the switched voltage output circuits is configured to utilize lightly doped field-effect transistors (LDFETs) as switches whenever possible. By sharing the switched voltage booster circuit among the switched voltage output circuits and utilizing LDFETs as switches, it is possible to reduce the solution size of the multi-output DC voltage circuit for potential use in space constrained wireless devices.

Those skilled in the art will recognize improvements and modifications to the preferred embodiments of the present disclosure. All such improvements and modifications are considered within the scope of the concepts disclosed herein and the claims that follow.

Further examples of feature combinations taught by the present disclosure are set out in the following numbered clauses:
1. A multi-output direct current (DC) voltage circuit comprising:
   a switched voltage booster circuit configured to:
      boost a battery voltage to thereby generate a boosted voltage substantially equal to twice the battery voltage; and
      alternately output the boosted voltage at a pair of booster outputs in accordance with a voltage booster duty cycle; and
   a plurality of switched voltage output circuits each coupled to the pair of booster outputs, the battery voltage, and a ground voltage and configured to independently output a respective one of a plurality of output voltages at a respective one of a plurality of voltage outputs in accordance with a respective one of a plurality of voltage output duty cycles shorter than or equal to the voltage booster duty cycle.
2. The multi-output DC voltage circuit of clause 1, wherein each of the plurality of switched voltage output circuits is further configured to toggle between one or more of the boosted voltage, the battery voltage, and the ground voltage in accordance with the respective one of the plurality of voltage output duty cycles to thereby output the respective one of the plurality of output voltages.
3. The multi-output DC voltage circuit of clause 1 or clause 2, wherein at least one of the plurality of voltage output duty cycles is different from another one of the plurality of voltage output duty cycles.
4. The multi-output DC voltage circuit of any preceding clause, further comprising a control circuit configured to:
   determine the voltage booster duty cycle and each of the plurality of voltage output duty cycles;
   control the switched voltage booster circuit to alternately output the boosted voltage at the pair of booster outputs in accordance with the voltage booster duty cycle; and control each of the plurality of switched voltage output circuits to output the respective one of the plurality of output voltages in accordance with the respective one of the plurality of voltage output duty cycles.
5. The multi-output DC voltage circuit of clause 4, wherein the control circuit is further configured to:
   divide the voltage booster duty cycle into a first duty cycle interval and a second duty cycle interval; and
   control the switched voltage booster circuit to alternately output the boosted voltage via a first one of the pair of booster outputs in the first duty cycle interval and a second one of the pair of booster outputs in the second duty cycle interval.
6. The multi-output DC voltage circuit of clause 5, wherein the control circuit is further configured to equally divide the voltage booster duty cycle into the first duty cycle interval and the second duty cycle interval.
7. The multi-output DC voltage circuit of clause 5 or clause 6, wherein the control circuit is further configured to:
   measure the boosted voltage at one or more of the pair of booster outputs during any of the first duty cycle interval and the second duty cycle interval;
   shorten the voltage booster duty cycle in response to the boosted voltage being higher than a defined threshold; and
   extend the voltage booster duty cycle in response to the boosted voltage being lower than the defined threshold.
8. The multi-output DC voltage circuit of any of clauses 5 to 7, wherein the switched voltage booster circuit comprises a first booster circuit and a second booster circuit each comprising:
   a respective first switch coupled between the battery voltage and a respective one of the pair of booster outputs;
   a respective second switch and a respective third switch coupled in series between the battery voltage and the ground voltage; and
   a respective fly capacitor coupled between the respective one of the pair of booster outputs and a respective middle node located in between the respective second switch and the respective third switch.
9. The multi-output DC voltage circuit of clause 8, wherein:
   the respective first switch and the respective second switch in each of the first booster circuit and the second booster circuit is a lightly doped p-type field-effect transistor (LDPFET); and
   the respective third switch in each of the first booster circuit and the second booster circuit is a lightly doped n-type field-effect transistor (LDNFET).
10. The multi-output DC voltage circuit of clause 8 or clause 9, wherein the control circuit is further configured to:
   during the first duty cycle interval:
      close the respective second switch and open the respective first switch and the respective third switch in the first booster circuit to thereby output the boosted voltage via the first one of the pair of booster outputs; and
      close the respective first switch and the respective third switch and open the respective second switch in the second booster circuit to thereby charge the respective fly capacitor to the battery voltage; and
   during the second duty cycle interval:
      close the respective second switch and open the respective first switch and the respective third switch in the second booster circuit to thereby output the boosted voltage via the second one of the pair of booster outputs; and
      close the respective first switch and the respective third switch and open the respective second switch in the first booster circuit to thereby charge the respective fly capacitor to the battery voltage.
11. The multi-output DC voltage circuit of any of clauses 8 to 10, wherein each of the plurality of switched voltage output circuits comprises:
   a respective pair of first output switches coupled to the pair of booster outputs, respectively;
   a respective second output switch coupled between the respective pair of first output switches and the respective one of the plurality of voltage outputs;
   a respective third output switch coupled between the battery voltage and the respective one of the plurality of voltage outputs; and
   a respective fourth output switch coupled between the respective one of the plurality of voltage outputs and the ground voltage.
12. The multi-output DC voltage circuit of clause 11, wherein:
   each of the respective pair of first output switches and the respective third output switch is a p-type field-effect transistor (PFET);
   the respective second output switch is a lightly doped p-type field-effect transistor (LDPFET); and
   the respective fourth output switch is a lightly doped n-type field-effect transistor (LDNFET).
13. A method for controlling a multi-output direct current (DC) voltage circuit to independently output a plurality of output voltages comprising:
   boosting a battery voltage to thereby generate a boosted voltage substantially equal to twice the battery voltage;
   alternately outputting the boosted voltage at a pair of booster outputs in accordance with a voltage booster duty cycle; and
   independently outputting each of the plurality of output voltages as a function of one or more of the boosted voltage, the battery voltage, and a ground voltage in accordance with a respective one of a plurality of voltage output duty cycles shorter than or equal to the voltage booster duty cycle.
14. A wireless device comprising a multi-output direct current (DC) voltage circuit, the multi-output DC voltage circuit comprises:
   a switched voltage booster circuit configured to:
      boost a battery voltage to thereby generate a boosted voltage substantially equal to twice the battery voltage; and
      alternately output the boosted voltage at a pair of booster outputs in accordance with a voltage booster duty cycle; and
   a plurality of switched voltage output circuits each coupled to the pair of booster outputs, the battery voltage, and a ground voltage and configured to independently output a respective one of a plurality of output voltages at a respective one of a plurality of voltage outputs in accordance with a respective one of a plurality of voltage output duty cycles shorter than or equal to the voltage booster duty cycle.
15. The wireless device of clause 14, wherein each of the plurality of switched voltage output circuits is further configured to toggle between one or more of the boosted voltage, the battery voltage, and the ground voltage in accordance with the respective one of the plurality of voltage output duty cycles to thereby output the respective one of the plurality of output voltages.
16. The wireless device of clause 14 or clause 15, wherein at least one of the plurality of voltage output duty cycles is different from another one of the plurality of voltage output duty cycles.
17. The wireless device of any of clauses 14 to 16, wherein the multi-output DC voltage circuit further comprises a control circuit configured to:
   determine the voltage booster duty cycle and each of the plurality of voltage output duty cycles;
   control the switched voltage booster circuit to alternately output the boosted voltage at the pair of booster outputs in accordance with the voltage booster duty cycle; and control each of the plurality of switched voltage output circuits to output the respective one of the plurality of output voltages in accordance with the respective one of the plurality of voltage output duty cycles.
18. The wireless device of clause 17, wherein the control circuit is further configured to:
   divide the voltage booster duty cycle into a first duty cycle interval and a second duty cycle interval; and
   control the switched voltage booster circuit to alternately output the boosted voltage via a first one of the pair of booster outputs in the first duty cycle interval and a second one of the pair of booster outputs in the second duty cycle interval.
19. The wireless device of clause 18, wherein the control circuit is further configured to equally divide the voltage booster duty cycle into the first duty cycle interval and the second duty cycle interval.
20. The wireless device of clause 18 or clause 19, wherein the control circuit is further configured to:
   measure the boosted voltage at one or more of the pair of booster outputs during any of the first duty cycle interval and the second duty cycle interval;
   shorten the voltage booster duty cycle in response to the boosted voltage being higher than a defined threshold; and
   extend the voltage booster duty cycle in response to the boosted voltage being lower than the defined threshold.

## Claims

1. A multi-output direct current (DC) voltage circuit comprising:
a switched voltage booster circuit configured to:
boost a battery voltage to thereby generate a boosted voltage substantially equal to twice the battery voltage; and
alternately output the boosted voltage at a pair of booster outputs in accordance with a voltage booster duty cycle; and
a plurality of switched voltage output circuits each coupled to the pair of booster outputs, the battery voltage, and a ground voltage and configured to independently output a respective one of a plurality of output voltages at a respective one of a plurality of voltage outputs in accordance with a respective one of a plurality of voltage output duty cycles shorter than or equal to the voltage booster duty cycle.

2. The multi-output DC voltage circuit of claim 1, wherein each of the plurality of switched voltage output circuits is further configured to toggle between one or more of the boosted voltage, the battery voltage, and the ground voltage in accordance with the respective one of the plurality of voltage output duty cycles to thereby output the respective one of the plurality of output voltages.

3. The multi-output DC voltage circuit of claim 1 or claim 2, wherein at least one of the plurality of voltage output duty cycles is different from another one of the plurality of voltage output duty cycles.

4. The multi-output DC voltage circuit of any preceding claim, further comprising a control circuit configured to:
determine the voltage booster duty cycle and each of the plurality of voltage output duty cycles;
control the switched voltage booster circuit to alternately output the boosted voltage at the pair of booster outputs in accordance with the voltage booster duty cycle; and
control each of the plurality of switched voltage output circuits to output the respective one of the plurality of output voltages in accordance with the respective one of the plurality of voltage output duty cycles.

5. The multi-output DC voltage circuit of claim 4, wherein the control circuit is further configured to:
divide the voltage booster duty cycle into a first duty cycle interval and a second duty cycle interval; and
control the switched voltage booster circuit to alternately output the boosted voltage via a first one of the pair of booster outputs in the first duty cycle interval and a second one of the pair of booster outputs in the second duty cycle interval.

6. The multi-output DC voltage circuit of claim 5, wherein the control circuit is further configured to equally divide the voltage booster duty cycle into the first duty cycle interval and the second duty cycle interval.

7. The multi-output DC voltage circuit of claim 5 or claim 6, wherein the control circuit is further configured to:
measure the boosted voltage at one or more of the pair of booster outputs during any of the first duty cycle interval and the second duty cycle interval;
shorten the voltage booster duty cycle in response to the boosted voltage being higher than a defined threshold; and
extend the voltage booster duty cycle in response to the boosted voltage being lower than the defined threshold.

8. The multi-output DC voltage circuit of any of claims 5 to 7, wherein the switched voltage booster circuit comprises a first booster circuit and a second booster circuit each comprising:
a respective first switch coupled between the battery voltage and a respective one of the pair of booster outputs;
a respective second switch and a respective third switch coupled in series between the battery voltage and the ground voltage; and
a respective fly capacitor coupled between the respective one of the pair of booster outputs and a respective middle node located in between the respective second switch and the respective third switch.

9. The multi-output DC voltage circuit of claim 8, wherein:
the respective first switch and the respective second switch in each of the first booster circuit and the second booster circuit is a lightly doped p-type field-effect transistor (LDPFET); and
the respective third switch in each of the first booster circuit and the second booster circuit is a lightly doped n-type field-effect transistor (LDNFET).

10. The multi-output DC voltage circuit of claim 8 or claim 9, wherein the control circuit is further configured to:
during the first duty cycle interval:
close the respective second switch and open the respective first switch and the respective third switch in the first booster circuit to thereby output the boosted voltage via the first one of the pair of booster outputs; and
close the respective first switch and the respective third switch and open the respective second switch in the second booster circuit to thereby charge the respective fly capacitor to the battery voltage; and
during the second duty cycle interval:
close the respective second switch and open the respective first switch and the respective third switch in the second booster circuit to thereby output the boosted voltage via the second one of the pair of booster outputs; and
close the respective first switch and the respective third switch and open the respective second switch in the first booster circuit to thereby charge the respective fly capacitor to the battery voltage.

11. The multi-output DC voltage circuit of any of claims 8 to 10, wherein each of the plurality of switched voltage output circuits comprises:
a respective pair of first output switches coupled to the pair of booster outputs, respectively;
a respective second output switch coupled between the respective pair of first output switches and the respective one of the plurality of voltage outputs;
a respective third output switch coupled between the battery voltage and the respective one of the plurality of voltage outputs; and
a respective fourth output switch coupled between the respective one of the plurality of voltage outputs and the ground voltage.

12. The multi-output DC voltage circuit of claim 11, wherein:
each of the respective pair of first output switches and the respective third output switch is a p-type field-effect transistor (PFET);
the respective second output switch is a lightly doped p-type field-effect transistor (LDPFET); and
the respective fourth output switch is a lightly doped n-type field-effect transistor (LDNFET).

13. A method for controlling a multi-output direct current (DC) voltage circuit to independently output a plurality of output voltages comprising:
boosting a battery voltage to thereby generate a boosted voltage substantially equal to twice the battery voltage;
alternately outputting the boosted voltage at a pair of booster outputs in accordance with a voltage booster duty cycle; and
independently outputting each of the plurality of output voltages as a function of one or more of the boosted voltage, the battery voltage, and a ground voltage in accordance with a respective one of a plurality of voltage output duty cycles shorter than or equal to the voltage booster duty cycle.

14. A wireless device comprising the multi-output direct current (DC) voltage circuit according to any of claims 1 to 12.
